# EUROPÄISCHE PATENTSCHRIFT

(11) **EP 2 456 653 B1**
(45) Veröffentlichungstag und Bekanntmachung des Hinweises auf die Patenterteilung: **05.11.2014**
(21) Anmeldenummer: 10724353.7
(22) Anmeldetag: 25.05.2010
(51) Int. Cl.: B62D 15/02, G05D 1/02, B60K 31/00, B60Q 1/48, B60W 30/06

(54) **VORRICHTUNG ZUM RANGIEREN EINES FAHRZEUGS MITTELS RANGIERZÜGEN MIT WENIGSTENS EINER TRAJEKTORIE**
DEVICE FOR MANOEUVRING A VEHICLE BY MEANS OF MANOEUVRES WITH AT LEAST ONE TRAJECTORY
DISPOSITIF DE STATIONNEMENT D'UN VÉHICULE AU MOYEN DE PARCOURS DE STATIONNEMENT QUI PRÉSENTENT AU MOINS UNE TRAJECTOIRE

(30) Priorität: 22.07.2009 DE 102009027941
(43) Veröffentlichungstag der Anmeldung: 30.05.2012
(73) Patentinhaber: Robert Bosch GmbH, 70442 Stuttgart (DE)
(72) Erfinder: PAMPUS, Christian, 71229 Leonberg (DE); NIEMZ, Volker, 71277 Rutesheim (DE)
(86) Internationale Anmeldenummer: PCT/EP2010/057138
(87) Internationale Veröffentlichungsnummer: WO 2011/009655

(56) Entgegenhaltungen:
- WO-A1-2005/120932
- WO-A2-2006/069976
- DE-A1- 19 940 007
- DE-A1-102007 004 972
- JP-A- 2008 296 638
- US-A- 5 684 696
- US-A1- 2008 255 728
- GOMEZ-BRAVO ET AL: "Continuous curvature path generation based on beta-spline curves for parking manoeuvres" ROBOTICS AND AUTONOMOUS SYSTEMS, ELSEVIER SCIENCE PUBLISHERS, AMSTERDAM, NL, Bd. 56, Nr. 4, 20. März 2008 (2008-03-20), Seiten 360-372, XP022550684 ISSN: 0921-8890

## Beschreibung

Die Erfindung betrifft eine Vorrichtung zum Rangieren eines Fahrzeugs mittels Rangierzügen mit wenigstens einer Trajektorie, entlang der das Fahrzeug bewegbar ist.

### Stand der Technik

Bekannt sind Vorrichtungen zum Rangieren eines Fahrzeugs mittels Rangierzügen, wobei diese Vorwärtsrangierzüge und/oder Rückwärtsrangierzüge betreffen können. Die Rangierzüge umfassen wenigstens eine Trajektorie, entlang der das Fahrzeug bewegbar ist. Trajektorien beschreiben vorliegend Bahnkurven, entlang der das Fahrzeug geführt wird. Diese können Kreisbahnen betreffen, wobei die Trajektorien auch von mathematischen Grundgeometrien abweichen können. Insbesondere können die Rangierzüge vorliegend auch Abschnitte aufweisen, die entlang einer Geraden verlaufen. Wird ein Fahrzeug beispielsweise in eine Parklücke rangiert, kann der Fahrer das Fahrzeug zunächst an der Parklücke vorbeiführen, was entlang einer Geraden oder einer ersten Trajektorie erfolgen kann. Eine sich an diese erste Trajektorie anschließende zweite Trajektorie kann durch die Vorrichtung derart bestimmt werden, dass das Fahrzeug in die Parklücke gelangen kann. Dabei ist die Anzahl der Trajektorien nicht begrenzt, und in Abhängigkeit der Parksituation können ein, zwei oder mehrere Trajektorien notwendig sein.

Grundsätzlich besteht die Möglichkeit, die Trajektorien als Kreisbahnen auszuführen, die in einem Stopppunkt ineinander geführt sind. Rangiert das Fahrzeug auf der ersten Kreisbahn in Vorwärtsfahrt, kann bei Fahrtrichtungs-Umkehr des Fahrzeugs aus dem Stopppunkt die zweite Kreisbahn mit der Rückwärtsfahrt des Fahrzeugs durchfahren werden. Dabei entsteht jedoch häufig der Nachteil, dass der Fahrer während des Standes des Fahrzeugs im Stopppunkt eine Lenkbewegung ausführen muss, wodurch das Fahrzeug eine gewisse Zeit im Stopppunkt angehalten werden muss. Der Stopppunkt kann beispielsweise im Bereich des Gegenverkehrs liegen, so dass während des Einparkvorgangs eine Gefahrensituation entsteht. Aufgrund der Haftreibung zwischen Reifen und Straße erfahren die Reifen einen stärkeren Abrieb, und die Lenkung muss zur Lenkbewegung mit höheren Kräften bedient werden, was als weniger komfortabel empfunden wird.

Aus der DE 102 56 770 A1 geht ein Verfahren zum semiautonomen Lenken eines rückwärts in eine Parklücke einzuparkenden Fahrzeugs hervor, wobei eine Trajektorie zum Einparken in vier Kurvenabschnitte unterteilt wird, die Kurvenabschnitte erstrecken sich dabei um einen Kreisbogen- oder Klothoidenabschnitt. Dabei kann das Fahrzeug zu Beginn des Einparkvorgangs in einem beliebigen Winkel schräg zur Längsrichtung der Parklücke stehen, und mittels einer Messelektronik wird die Position und Ausrichtung des Fahrzeugs relativ zur Parklücke in der Ausgangsstellung erfasst. Dabei kann der erste Kurvenabschnitt eine Gerade oder eine Klothoide beschreiben, wobei wesentlich ist, dass der erste Kurvenabschnitt glatt in den zweiten Kurvenabschnitt übergeht. Im Ergebnis ergibt sich ein Einparkvorgang, über den zwischen der Startstellung und der Parkstellung des Einparkvorgangs die Lenkung so gesteuert wird, dass Lenkwinkelveränderungen kontinuierlich erfolgen. Dies hat den Vorteil, dass das Fahrzeug während des Einparkvorgangs an den Übergängen zwischen den einzelnen Kurvenabschnitten nicht angehalten werden muss, sondern ohne anzuhalten von der Startstellung in die Parkstellung gefahren werden kann. Die beschriebene Verwendung von Klothoiden betrifft jedoch nur Parkzüge, die in einer fortlaufenden Bewegungsrichtung des Fahrzeugs ausgeprägt sind, so dass zwischen den Kurvenzügen Lenkbewegungen des Fahrzeugs erforderlich sind, die gegebenenfalls durch den Fahrer ausgeführt werden müssen.

Aus der DE 10 2005 006 966 geht eine Einparkhilfe hervor, durch die auf das Lenkrad des Kraftfahrzeugs ein Lenkmoment aufgebracht wird und mindestens ein künstlicher Lenkanschlag generiert wird, so dass der Fahrer durch den künstlichen Lenkanschlag auf einer Einfahrbahn für das Einparken des Fahrzeugs geführt wird. Dazu wird zumindest ein Teilbereich der Einfahrbahn auf Grundlage eines oder mehrerer Polynome ermittelt. Der Ansatzpunkt an die Einfahrbahn wird für weit von der Parklücke entfernt stehende Fahrzeuge vorzugsweise in der Nähe eines Umlenkpunktes gewählt, weil eine gestreckte Anfahrbahn einen direkten Weg und nur ein geringes Einfahren in die Gegenfahrbahn mit sich bringt. Dadurch wird zwar der Vorteil erreicht, dass ein möglichst großer Startbereich für den Einparkvorgang erzeugt wird, um unnötige Lenkvorgänge zu vermeiden. Dennoch erfordert die Einparkhilfe Lenkmanöver, die zwischen zwei Einparkzügen notwendig sind.

Die DE 10 2007 004 972 A1 ist als nächstliegender Stand der Technik nach dem Oberbegriff des Anspruchs 1 zu sehen und offenbart ein Verfahren zum rückwärtigen Einparken eines Fahrzeugs sowie ein Einparkhilfesystem. Dabei ist vorgesehen, dass zum rückwärtigen Einparken eines Fahrzeugs in eine sich parallel zur Fahrbahn erstreckende Parklücke das Fahrzeug entlang einer Soll-Park-Bahn geführt wird, wobei das Fahrzeug aus einem Startpunkt entlang einer Trajektorie über einen Stopppunkt, an dem die Fahrtrichtung des Fahrzeugs umgekehrt wird, entlang einer an dem Stopppunkt angrenzenden Trajektorie bis zu dem Endpunkt geführt wird. Dabei kann die Trajektorie zwischen dem Startpunkt und dem Stopppunkt als Wendeklothoide ausgeführt sein, so dass im Umkehrpunkt, nämlich dem Stopppunkt, auf die Trajektorie bis zum Endpunkt nur ein geringer Lenkeinschlag des Fahrzeugs erforderlich ist.

### Offenbarung der Erfindung

Es ist daher die Aufgabe der vorliegenden Erfindung, eine Vorrichtung zum Rangieren eines Fahrzeugs zu schaffen, die die Nachteile des voranstehenden Standes der Technik vermeidet und eine verbesserte Führung des Fahrzeugs während des Einparkvorgangs ermöglicht.

Diese Aufgabe wird ausgehend von einer Vorrichtung gemäß dem Oberbegriff des Anspruchs 1 sowie einem Verfahren gemäß Anspruch 8 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass die Rangierzüge wenigstens eine Wendeklothoide aufweisen, die an zumindest eine Trajektorie angrenzt und die derart ausgeführt ist, dass eine Lenkbewegung des Fahrzeugs im Stand vermeidbar ist.

Durch die Verwendung wenigstens einer Wendeklothoide kann das Fahrzeug angrenzend an zumindest eine der Trajektorien derart ausgerichtet werden, dass eine Betätigung der Lenkung im Stand des Fahrzeugs vermieden werden kann

Die Wendeklothoide beschreibt eine Form eines Übergangsbogens von einer ersten Krümmung in eine entgegengesetzte, zweite Krümmung. Der Übergang findet in einem Scheitelpunkt der Wendeklothoide statt, in dem die Lenkung des Fahrzeugs einen neutralen Lenkeinschlag durchläuft. Folglich kann die Ausrichtung des Fahrzeugs zwischen zwei Trajektorien so ausgerichtet werden, dass eine Lenkbewegung im Stand vermieden werden kann.

Die Rangierzüge zum Rangieren des Fahrzeugs mit der wenigstens einen Trajektorie und der Wendeklothoide kann von der Vorrichtung vorbestimmt werden. Die Vorrichtung kann bei Bestimmung der Rangierzüge Umgebungsdaten der Parksituation auswerten, so dass auf Basis des zur Verfügung stehenden Rangierraumes die Rangierzüge bestimmt werden. Die Führung des Fahrzeugs kann anschließend vom Fahrer selbst übernommen werden, wobei die Vorrichtung die zu fahrenden Trajektorien und Wendeklothoiden dem Fahrer anzeigt oder angibt. Jedoch besteht auch die Möglichkeit, dass das Fahrzeug durch die Vorrichtung semi-autonom oder vollautonom ausgeführt wird, derart, dass die Vorrichtung das Fahrpedal und/oder das Bremspedal und/oder auch die Lenkung betätigt.

Das Rangieren des Fahrzeugs umfasst wenigstens einen Stopppunkt, in welchem die Fahrtrichtung des Fahrzeugs bei Ausführen der Rangierzüge umkehrbar ist. Folglich bildet der Stopppunkt den Übergangspunkt zwischen zwei Rangierzügen. Dabei ist vorgesehen , dass die Wendeklothoide an den zumindest einen Stopppunkt angrenzt.

Die Wendeklothoide kann innerhalb der Rangierzüge zwischen dem Stopppunkt und einer nach dem Stopppunkt durchfahrbaren Trajektorie angeordnet sein, so dass zwischen dem Stopppunkt und der Trajektorie die Wendeklothoide durchfahrbar ist. Gelangt das Fahrzeug nach Durchfahren einer ersten Trajektorie an den Stopppunkt, um die Fahrtrichtung umzukehren, kann der nachfolgende Rangierzug mit der erfindungsgemäßen Wendeklothoide beginnen, um in die darauf folgende Trajektorie überzugehen. Im Ergebnis muss die Lenkung im Stopppunkt nicht betätigt werden, so dass eine Betätigung der Lenkung lediglich während der Bewegung des Fahrzeugs erfolgen muss.

Alternativ oder zusätzlich kann vorgesehen sein, dass die Wendeklothoide innerhalb der Rangierzüge zwischen einer Trajektorie und dem nach Durchfahren der Trajektorie zu erreichenden Stopppunkt angeordnet ist, so dass zwischen der Trajektorie und dem Stopppunkt die Wendeklothoide durchfahrbar ist. Folglich erreicht das Fahrzeug den Stopppunkt nach der Wendeklothoide, so dass das Fahrzeug derart ausgerichtet ist, dass die nachfolgende Trajektorie befahren werden kann, ohne im Stand die Lenkung erneut zu bewegen.

Es ist von besonderem Vorteil, wenn wenigstens eine der Trajektorie als Kreisbahn ausgeführt ist, wobei die Krümmungsaußenseiten von zwei beim Rangieren des Fahrzeugs aufeinander folgenden Trajektorien vorzugsweise aufeinander zu weisen.

Das Rangieren des Fahrzeugs mittels der Rangierzüge kann vorzugsweise zum Einparken des Fahrzeugs in eine Parklücke ausgeführt sein. Die Parklücke kann in Bezug auf die Fahrtrichtung des Fahrzeugs, aus der sich das Fahrzeug der Parklücke nähert, eine Querparklücke quer zur Fahrtrichtung, eine Längsparklücke längs zur Fahrtrichtung oder eine Diagonalparklücke diagonal zur Fahrtrichtung betreffen.

Ein erster Rangierzug, umfassend zumindest eine Trajektorie und gegebenenfalls eine erste Wendeklothoide, kann dabei eine Vorwärtsfahrt von der Parklücke weg betreffen, wobei ein zweiter, nachfolgender Rangierzug eine Trajektorie und gegebenenfalls eine weitere Wendeklothoide eine Rückwärtsfahrt in die Parklücke betreffen kann. Die Vorrichtung kann die Rangierzüge zum Rangieren des Fahrzeugs jedoch auch derart berechnen, dass das Fahrzeug vorwärts in die Parklücke eingefahren wird. Führt der Fahrer das Fahrzeug zunächst an der Parklücke vorbei, kann der erste Rangierzug eine Trajektorie und gegebenenfalls eine Wendeklothoide betreffen, auf dem das Fahrzeug in Rückwärtsfahrt von der Parklücke weg bewegt wird. Der nachfolgende Rangierzug kann eine Trajektorie und gegebenenfalls eine Wendeklothoide umfassen, auf dem das Fahrzeug vorwärts in die Parklücke eingefahren wird. Die Trajektorien betreffen dabei vorzugsweise Kreisbahnen.

Es ist von besonderem Vorteil, wenn die Wendeklothoide einer Trajektorie vorgelagert ist, über die das Fahrzeug eine Rückwärtsfahrt ausführt. Diese Rückwärtsfahrt kann insbesondere das Führen des Fahrzeugs in eine Parklücke betreffen. Die Wendeklothoide geht dabei derart in die Trajektorie und vorzugsweise in die Kreisbahn über, dass zwischen dem Ende der Wendeklothoide und dem Beginn der Trajektorie das Fahrzeug nicht angehalten werden muss, wobei im Übergang ferner eine gesonderte Lenkbewegung nicht erforderlich ist. Folglich entspricht die Ausrichtung des Fahrzeugs am Ende der Wendeklothoide der Ausrichtung des Fahrzeugs am Beginn der nachfolgenden Trajektorie.

Die vorliegende Erfindung richtet sich ferner auf ein Verfahren zum Rangieren eines Fahrzeugs mittels Rangierzügen mit wenigstens einer Trajektorie, entlang der das Fahrzeug rangiert wird, wobei das Verfahren wenigstens den Schritt der Bestimmung zumindest einer Wendeklothoide umfasst, die an wenigstens eine Trajektorie angrenzt und die Ausbildung der Wendeklothoide derart, dass eine Lenkbewegung des Fahrzeugs im Stand vermeidbar ist. Ferner umfasst das Verfahren die Bestimmung von Rangierzügen mit einem Stopppunkt zwischen zwei Trajektorien, in welchem die Fahrtrichtung des Fahrzeugs bei Ausführung des Rangierens umgekehrt wird, wobei die Wendeklothoide bei der Bestimmung der Trajektorien angrenzend an den Stopppunkt angeordnet wird.

Das Verfahren umfasst ferner erfindungsgemäß einen Schritt des Zurückführens des Fahrzeugs auf den Stopppunkt, wenn das Fahrzeug über den Stopppunkt hinweg in einen Überfahrbereich hinein bewegt wurde. Daraus ergibt sich der Vorteil, dass die Rangierzüge nach Überfahren eines Stopppunktes nicht neu berechnet werden müssen, sondern die Vorrichtung weist den Fahrer an oder bewegt das Fahrzeug aktiv auf den Stopppunkt zurück, so dass nachfolgend der bereits berechnete Rangierzug ausgeführt werden kann. Insbesondere kann nach dem Stopppunkt die Wendeklothoide folgen, die jedoch nur beginnend im Stopppunkt sinnvoll angefahren werden kann.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Ansicht des Rangierens eines Fahrzeugs mittels Rangierzügen, wie diese mittels einer erfindungsgemäßen Vorrichtung ausführbar sind und
- Figur 2: eine schematische Ansicht mit einem weiteren Ausführungsbeispiel von möglichen Rangierzügen, die mit der erfindungsgemäßen Vorrichtung ausführbar sind.

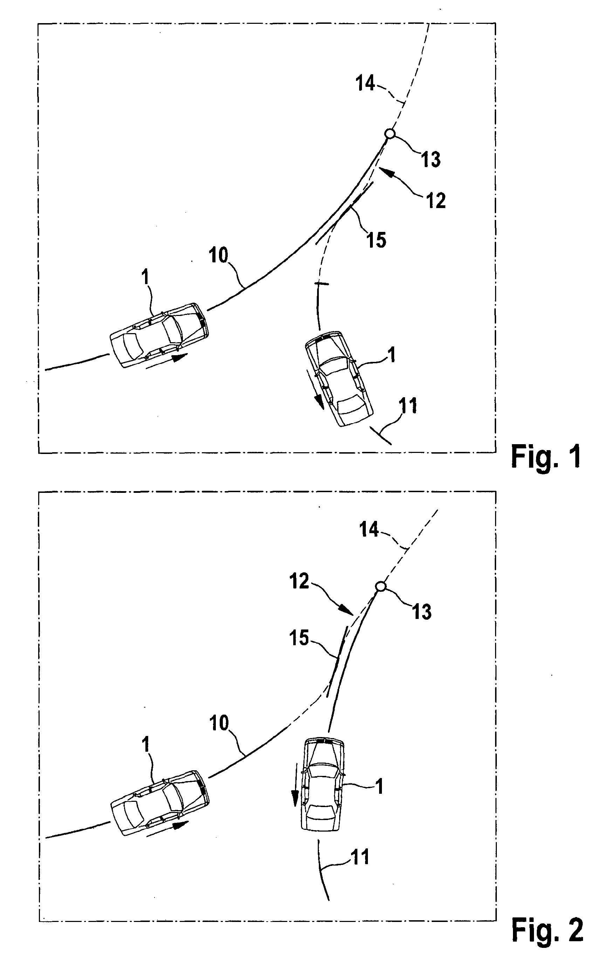

Die Figuren 1 und 2 zeigen ein Fahrzeug 1, das sich in Fahrtrichtung auf einer Trajektorie 10 bewegt. Die Trajektorie 10 ist als Kreisbahn ausgeführt. Gelangt das Fahrzeug 1 an den Stopppunkt 13, so hält dieses im Stopppunkt 13 an und kann seine Fahrtrichtung umkehren. Folglich ist das Fahrzeug 1 ein weiteres Mal dargestellt, nämlich auf einer Trajektorie 11, die eine weitere Kreisbahn bildet. Die Krümmungsaußenseiten der Kreisbahnen weisen aufeinander zu, so dass das Fahrzeug über der Trajektorie 10 mit einem leichten Links-Lenkeinschlag bewegt wird und auf der Trajektorie 11 mit einem Rechts-Lenkeinschlag.

Zwischen den Trajektorien 10 und 11 sowie dem Stopppunkt 13 ist erfindungsgemäß eine Wendeklothoide 12 vorgesehen. Gemäß Figur 1 befindet sich die Wendeklothoide 12 zwischen dem Stopppunkt 13 und der Trajektorie 11, wohingegen in Figur 2 die Wendeklothoide 12 zwischen der Trajektorie 10 und dem Stopppunkt 13 angeordnet ist.

Die Wendeklothoide 12 in Figur 1 wird folglich vom Fahrzeug 1 durchfahren, wenn dieses den Rangierzug beginnt, der nach dem Rangierzug folgt, der das Durchfahren der Trajektorie 10 betrifft. Die Wendeklothoide 12 besitzt einen Scheitelpunkt 15, wobei sich vor dem Scheitelpunkt 15 eine Teilbahn mit einer Krümmung in einer ersten Richtung befindet, die nach dem Scheitelpunkt 15 in eine Teilbahn übergeht, die eine Krümmung in einer entgegengesetzten Richtung aufweist. Folglich durchläuft die Lenkung des Fahrzeugs 1 einen neutralen Lenkeinschlag im Scheitelpunkt 15.

Die Wendeklothoide 12 ist derart beschaffen, dass die Lenkung des Fahrzeugs 1 im Stopppunkt 13 nicht betätigt werden muss. Würden die beiden als Kreisbahnen ausgeführten Trajektorien 10 und 11 gemäß der Darstellung ohne die Wendeklothoide 12 im Stopppunkt 13 aufeinander treffen, so würde die Lenkung des Fahrzeugs 1 betätigt werden müssen, so lange sich das Fahrzeug noch im Stopppunkt 13 befindet. Es sind zwar Rangierzüge mit Trajektorien 10 und 11 bekannt, die jeweils schon selbst als Wendeklothoiden ausgeführt sind, jedoch führt dies zu einem stärkeren Lenkerfordernis, da Trajektorien 10 und 11, die als Kreisbahnen gemäß der Darstellung in Figur 1 und 2 ausgeführt sind, keine Lenkbewegung benötigen, sofern die Lenkung des Fahrzeugs 1 den erforderlichen Lenkeinschlag beibehält, während das Fahrzeug 1 auf den Trajektorien 10 und 11 bewegt wird.

Fährt das Fahrzeug 1 über den Stopppunkt 13 hinaus in einen Überfahrbereich 14, der beispielsweise eine Weiterführung der Trajektorie 10 und die zugehörige Kreisbahn betreffen kann, so ist erfindungsgemäß vorgesehen, dass die Vorrichtung das Fahrzeug 1 zunächst in den Stopppunkt 13 zurückführt, um nachfolgend die Wendeklothoide 12 gemäß Figur 1 einzuleiten. Fährt das Fahrzeug 1 gemäß Figur 2 in den Überfahrbereich 14 hinein, so wird auch in diesem Fall die Vorrichtung das Fahrzeug 1 zunächst in den Stopppunkt 13 zurückführen, um in die Trajektorie 11 einzufahren.

Die Darstellungen in den Figuren 1 und 2 zeigen jeweils nur einen Ausschnitt der Rangierzüge des Fahrzeugs 1 während eines gesamten Rangiervorgangs, der beispielsweise notwendig sein kann, um das Fahrzeug 1 in eine Parklücke einzuparken. Die Parklücke kann sich beispielsweise am Ende der Trajektorie 11 befinden, wobei das Fahrzeug 1 aus der linken Bildrichtung über die Trajektorie 10 in die dargestellte Rangiersituation einfährt. Die Verwendung einer Wendeklothoide 12 am Ende einer ersten Trajektorie 10 oder zu Beginn einer weiteren Trajektorie 11 kann folglich mehrfach vorgesehen sein, sofern mehrere Rangierzüge notwendig sind. Insbesondere sei angemerkt, dass je nach Fahrsituation auch zwei Trajektorien 10 und 11 in einem Stopppunkt 13 aufeinander treffen können, wobei sowohl das Anfahren des Stopppunktes 13 als auch das Weiterfahren aus dem Stopppunkt 13 über eine jeweilige Wendeklothoide 12 erfolgen kann.

Die vorliegende Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten, räumliche Anordnungen und Verfahrensschritte, können sowohl für sich als auch in den verschiedensten Kombinationen erfindungswesentlich sein.

## Patentansprüche

1. Vorrichtung zum Rangieren eines Fahrzeugs (1) mittels Rangierzügen mit wenigstens einer Trajektorie (10, 11), entlang der das Fahrzeug (1) bewegbar ist, wobei wenigstens eine der Trajektorien als Kreisbahn ausgeführt ist, und wobei die Rangierzüge wenigstens eine Wendeklothoide (12) aufweisen, die an zumindest eine Trajektorie (10, 11) angrenzt und die derart ausgeführt ist, dass eine Lenkbewegung des Fahrzeugs (1) im Stand vermeidbar ist, und wobei das Rangieren des Fahrzeugs (1) wenigstens einen Stopppunkt (13) umfasst, in welchem die Fahrtrichtung des Fahrzeugs (1) bei Ausführen der Rangierzüge umkehrbar ist, und an welchen die Wendeklothoide und oder eine der Trajektorien (10, 11) angrenzt, **dadurch gekennzeichnet, dass** an den Stopppunkt (13) ein Überfahrbereich (14) angrenzt, der als Kreisbahn der an dem Stopppunkt (13) angrenzenden Trajektorie (10,11) ausgeführt ist, oder welcher eine Krümmung aufweist, die der Krümmung des die Wendeklothoide (12) bildenden Übergangsbogens, welche an den Stopppunkt angrenzt, folgt.

2. Vorrichtung nach Anspruch 1, **dadurch gekennzeichnet, dass** die Wendeklothoide (12) zwischen dem Stopppunkt (13) und einer nach dem Stopppunkt (13) durchfahrbaren Trajektorie (11) angeordnet ist, sodass zwischen dem Stopppunkt (13) und der Trajektorie (11) die Wendeklothoide (12) durchfahrbar ist.

3. Vorrichtung nach Anspruch 1 oder 2, **dadurch gekennzeichnet, dass** die Wendeklothoide (12) zwischen einer Trajektorie (10) und dem nach Durchfahren der Trajektorie (10) zu erreichenden Stopppunkt (13) angeordnet ist, sodass zwischen der Trajektorie (10) und dem Stopppunkt (13) die Wendeklothoide (12) durchfahrbar ist.

4. Vorrichtung nach einem der vorgenannten Ansprüche, **dadurch gekennzeichnet, dass** wenigstens eine Trajektorie (10, 11) als Kreisbahn (10, 11) ausgeführt ist, wobei die Krümmungsaußenseiten von zwei bei Rangieren des Fahrzeugs (1) aufeinander folgenden Trajektorien (10, 11) vorzugsweise aufeinander zu weisen.

5. Vorrichtung nach einem der vorgenannten Ansprüche, **dadurch gekennzeichnet, dass** die Wendeklothoide (12) einen Scheitelpunkt (15) aufweist, in dem die Lenkung des Fahrzeugs (1) einen neutralen Lenkeinschlag durchläuft.

6. Vorrichtung nach einem der vorgenannten Ansprüche, **dadurch gekennzeichnet, dass** das Rangieren des Fahrzeugs (1) mittels der Rangierzüge zum Einparken des Fahrzeugs (1) in eine Parklücke ausgeführt ist.

7. Vorrichtung nach einem der vorgenannten Ansprüche, **dadurch gekennzeichnet, dass** die Wendeklothoide (12) einer Trajektorie (11) vorgelagert ist, über die das Fahrzeug (1) eine Rückwärtsfahrt ausführt.

8. Verfahren zum Rangieren eines Fahrzeugs (1) mittels Rangierzügen mit wenigstens einer Trajektorie (10, 11), entlang der das Fahrzeug (1) rangiert wird, wobei wenigstens eine der Trajektorien als Kreisbahn ausgeführt ist, und wobei die Rangierzüge wenigstens eine Wendeklothoide (12) aufweisen, die an zumindest eine der Trajektorien (10, 11) angrenzt und die derart ausgeführt ist, dass eine Lenkbewegung des Fahrzeugs (1) im Stand vermeidbar ist, und wobei das Rangieren des Fahrzeugs (1) wenigstens einen Stopppunkt (13) umfasst, in welchem die Fahrtrichtung des Fahrzeugs (1) bei Ausführen der Rangierzüge umkehrbar ist, und an welchen die Wendeklothoide (12) und oder eine der Trajektorien (10, 11) angrenzt, und wobei an den Stopppunkt (13) ein Überfahrbereich (14) angrenzt, der als Kreisbahn der an dem Stopppunkt (13) angrenzenden Trajektorie (10, 11) ausgeführt ist, oder welcher eine Krümmung aufweist, die der Krümmung des die Wendeklothoide (12) bildenden Übergangsbogens, welche an den Stopppunkt (13) angrenzt, folgt, wobei das Verfahren wenigstens die folgenden Schritte aufweist:
- Bestimmung der Wendeklothoide (12), die an zumindest eine der Trajektorien (10, 11) angrenzt,
- Ausbildung der Wendeklothoide (12) derart, dass eine Lenkbewegung des Fahrzeugs (1) im Stand vermeidbar ist und
- Rückführung des Fahrzeugs (1) aus dem Überfahrbereich (14) zurück auf den Stopppunkt (13), wenn das Fahrzeug (1) über den Stopppunkt (13) hinweg in den Überfahrbereich (14) hinein bewegt wird.

9. Verfahren nach Anspruch 8, **dadurch gekennzeichnet, dass** wenigstens ein Stopppunkt (13) zwischen zwei Trajektorien (10, 11) bestimmt wird, in welchem die Fahrtrichtung des Fahrzeugs (1) bei Ausführen des Rangierens umgekehrt wird, wobei die Wendeklothoide (12) bei der Bestimmung der Trajektorien (10, 11) angrenzend an den Stopppunkt (13) angeordnet wird.

10. Verfahren nach Anspruch 8 oder 9, **dadurch gekennzeichnet, dass** die Vorrichtung das Fahrzeug (1) auf den Stopppunkt (13) zurückführt, wenn das Fahrzeug (1) über den Stopppunkt (13) hinweg in einen Überfahrbereich (14) hinein bewegt wird.

## Claims

1. Device for manoeuvring a vehicle (1) by means of manoeuvres, with at least one trajectory (10, 11) along which the vehicle (1) can be moved, wherein at least one of the trajectories is embodied as a circular path, and wherein the manoeuvres have at least one turning clothoid (12) which adjoins at least one trajectory (10, 11) and which is embodied in such a way that a turning movement of the vehicle (1) in the stationary state can be avoided, and wherein the manoeuvring of the vehicle (1) comprises at least one stopping point (13) in which the direction of travel of the vehicle (1) when carrying out the manoeuvres is reversible, and which is adjoined by the turning clothoid and/or one of the trajectories (10, 11),
**characterized in that** the stopping point (13) is adjoined by a travel-over region (14) which is embodied as a circular path of the trajectory (10, 11) which adjoins the stopping point (13) or which travel-over region (14) has a curvature which follows the curvature of the transition curve which forms the turning clothoid (12) and which curvature adjoins the stopping point.

2. Device according to Claim 1, **characterized in that** the turning clothoid (12) is arranged between the stopping point (13) and a trajectory (11) which can be travelled through after the stopping point (13), with the result that the turning clothoid (12) can be travelled through between the stopping point (13) and the trajectory (11).

3. Device according to Claims 1 or 2, **characterized in that** the turning clothoid (12) is arranged between a trajectory (10) and the stopping point (13) which is to be reached after the trajectory (10) has been travelled through, with the result that the turning clothoid (12) can be travelled through between the trajectory (10) and the stopping point (13).

4. Device according to one of the abovementioned claims, **characterized in that** at least one trajectory (10, 11) is embodied as a circular path (10, 11), wherein the outer sides of the curvature of two trajectories (10, 11) which follow on from one another during the manoeuvring of the vehicle (1) preferably point towards one another.

5. Device according to one of the abovementioned claims, **characterized in that** the turning clothoid (12) has an apex point (15) at which the steering of the vehicle (1) passes through a neutral steering lock.

6. Device according to one of the abovementioned claims, **characterized in that** the manoeuvring of the vehicle (1) is carried out by means of the manoeuvres for parking the vehicle (1) in a parking space.

7. Device according to one of the abovementioned claims, **characterized in that** the turning clothoid (12) is positioned in front of a trajectory (11) via which the vehicle (1) carries out a reversing movement.

8. Method for manoeuvring a vehicle (1) by means of manoeuvres, with at least one trajectory (10, 11) along which the vehicle (1) is moved, wherein at least one of the trajectories is embodied as a circular path, and wherein the manoeuvres have at least one turning clothoid (12) which adjoins at least one of the trajectories (10, 11) and which is embodied in such a way that a steering movement of the vehicle (1) in the stationary state can be avoided, and wherein the manoeuvring of the vehicle (1) comprises at least one stopping point (13) in which the direction of travel of the vehicle (1) when carrying out the manoeuvres is reversible, and which is adjoined by the turning clothoid and/or one of the trajectories (10, 11),
and wherein the stopping point (13) is adjoined by a travel-over region (14) which is embodied as a circular path of the trajectory (10, 11) which adjoins the stopping point (13) or travel-over region (14) which has a curvature which follows the curvature of the transition curve which forms the turning clothoid (12) and which curvature adjoins the stopping point (13), wherein the method has at least the following steps:
- determining the turning clothoid (12) which adjoins at least one of the trajectories (10, 11),
- forming the turning clothoid (12) in such a way that a steering movement of the vehicle (1) in the stationary state can be avoided, and
- reversing the vehicle (1) out of the travel-over region (14) back to the stopping point (13) if the vehicle (1) is moved into the travel-over region (14) via the stopping point (13).

9. Method according to Claim 8, **characterized in that** at least one stopping point (13) between two trajectories (10, 11) is determined, at which stopping point (13) the direction of travel of the vehicle (1) is reversed when the manoeuvring is carried out, wherein the turning clothoid (12) is arranged adjacent to the stopping point (13) during the determination of the trajectories (10, 11).

10. Method according to Claim 8 or 9, **characterized in that** the device reverses the vehicle (1) onto the stopping point (13) if the vehicle (1) is moved into a travel-over region (14) via the stopping point (13).

## Revendications

1. Dispositif de stationnement d'un véhicule (1) au moyen de manoeuvres de stationnement qui présentent au moins une trajectoire (10, 11) le long de laquelle le véhicule (1) peut être déplacé, au moins une des trajectoires prenant la forme d'une orbite et les manoeuvres de stationnement présentant au moins une clothoïde d'inflexion (12) contiguë à au moins une trajectoire (10, 11) et réalisée de façon à éviter un mouvement de braquage du véhicule (1) à l'arrêt et le stationnement du véhicule (1) comprenant au moins un point d'arrêt (13) au niveau duquel la direction de conduite du véhicule (1) peut être inversée lors de la réalisation des manoeuvres de stationnement et contigu à la clothoïde d'inflexion et/ou à une des trajectoires (10, 11), **caractérisé en ce qu'**une zone de franchissement de ligne (14) est contiguë au point d'arrêt (13), ladite zone prenant la forme d'une orbite de la trajectoire (10, 11) contiguë au point d'arrêt (13) ou comportant une courbure suivant la courbure de l'arc transitoire formant la clothoïde d'inflexion (12) contiguë au point d'arrêt.

2. Dispositif selon la revendication 1, **caractérisé en ce que** la clothoïde d'inflexion (12) est disposée entre le point d'arrêt (13) et une trajectoire (11) suivie après le point d'arrêt (13), de sorte que la clothoïde d'inflexion (12) peut être suivie entre le point d'arrêt (13) et la trajectoire (11).

3. Dispositif selon la revendication 1 ou 2, **caractérisé en ce que** la clothoïde d'inflexion (12) est disposée entre une trajectoire (10) et le point d'arrêt (13) à atteindre après avoir suivi la trajectoire (10), de sorte que la clothoïde d'inflexion (12) peut être suivie entre la trajectoire (10) et le point d'arrêt (13).

4. Dispositif selon l'une quelconque des revendications précédentes, **caractérisé en ce qu'**au moins une trajectoire (10, 11) prend la forme d'une orbite (10, 11), les côtés extérieurs de la courbe se composant de deux trajectoires (10, 11) se suivant lors du stationnement du véhicule (1), de préférence orientées de façon coordonnée.

5. Dispositif selon l'une quelconque des revendications précédentes, **caractérisé en ce que** la clothoïde d'inflexion (12) comporte un point culminant (15) au niveau duquel la direction du véhicule (1) suit une direction de braquage neutre.

6. Dispositif selon l'une quelconque des revendications précédentes, **caractérisé en ce que** le stationnement du véhicule (1) est réalisé au moyen de manoeuvres de stationnement destinées à stationner le véhicule (1) dans une place de stationnement.

7. Dispositif selon l'une quelconque des revendications précédentes, **caractérisé en ce que** la clothoïde d'inflexion (12) précède une trajectoire (11) sur laquelle le véhicule (1) effectue un mouvement de recul.

8. Procédé de stationnement d'un véhicule (1) au moyen de manoeuvres de stationnement qui présentent au moins une trajectoire (10, 11) le long de laquelle le véhicule (1) peut être stationné, au moins une des trajectoires prenant la forme d'une orbite et les manoeuvres de stationnement présentant au moins une clothoïde d'inflexion (12) contiguë à au moins une trajectoire (10, 11) et réalisée de façon à éviter un mouvement de braquage du véhicule (1) à l'arrêt et le stationnement du véhicule (1) comprenant au moins un point d'arrêt (13) au niveau duquel la direction de conduite du véhicule (1) peut être inversée lors de la réalisation des manoeuvres de stationnement et contigu à la clothoïde d'inflexion (12) et/ou à une des trajectoires (10, 11) et une zone de franchissement de ligne (14) étant contiguë au point d'arrêt (13), ladite zone prenant la forme d'une orbite de la trajectoire (10, 11) contiguë au point d'arrêt (13) ou comportant une courbure suivant la courbure de l'arc transitoire formant la clothoïde d'inflexion (12) contiguë au point d'arrêt (13), le procédé comportant au moins les étapes suivantes :
- détermination de la clothoïde d'inflexion (12) contiguë à au moins une des trajectoires (10, 11) ;
- façonnement de la clothoïde d'inflexion (12) de façon à éviter un mouvement de braquage du véhicule (1) à l'arrêt ; et
- reconduite du véhicule (1) hors de la zone de franchissement de ligne (14) jusqu'au point d'arrêt (13) lorsque le véhicule (1) est déplacé dans la zone de franchissement de ligne (14) au-delà du point d'arrêt (13).

9. Procédé selon la revendication 8, **caractérisé en ce qu'**au moins un point d'arrêt (13) au niveau duquel la direction de conduite du véhicule (1) est inversée lors de la réalisation du stationnement est défini entre deux trajectoires (10, 11), la clothoïde d'inflexion (12) étant disposée de façon à être contiguë au point d'arrêt (13) lors de la détermination des trajectoires (10, 11).

10. Procédé selon la revendication 8 ou 9, **caractérisé en ce que** le dispositif ramène le véhicule (1) au point d'arrêt (13) lorsque le véhicule (1) est déplacé dans une zone de franchissement de ligne (14), au-delà du point d'arrêt (13).
